(19) Europäisches Patentamt
European Patent Office
Office européen des brevets

(11) **EP 2 632 570 B1**

(12) **EUROPEAN PATENT SPECIFICATION**

(45) Date of publication and mention
of the grant of the patent:
**29.04.2020 Bulletin 2020/18**

(21) Application number: **11835402.6**

(22) Date of filing: **28.10.2011**

(51) Int Cl.:
*B01D 53/62* [(2006.01)]       *B01D 53/84* [(2006.01)]
*C12N 9/88* [(2006.01)]       *B01D 53/14* [(2006.01)]
*C12F 3/02* [(2006.01)]

(86) International application number:
**PCT/CA2011/001210**

(87) International publication number:
**WO 2012/055035 (03.05.2012 Gazette 2012/18)**

(54) **ENZYME ENHANCED C02 DESORPTION PROCESSES**

VERBESSERTE ENZYM-C02-DESORPTIONSVERFAHREN

PROCÉDÉS DE DÉSORPTION DE CO2 AMÉLIORÉE PAR DES ENZYMES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2010 US 344869 P**

(43) Date of publication of application:
**04.09.2013 Bulletin 2013/36**

(73) Proprietor: **SAIPEM S.p.A.**
**20097 San Donato Milanese (MI) (IT)**

(72) Inventors:
• **PENDERS, Nathalie J.M.C**
**7006 LW Doetinchem (NL)**
• **DERKS, Peter, W.J.**
**5761 CH Bakel (NL)**

• **VERSTEEG, Geert, F.**
**7522 PD Enschede (NL)**
• **FRADETTE, Sylvie**
**Pintendre**
**Québec G6C 1P3 (CA)**

(74) Representative: **Croce, Valeria et al**
**Jacobacci & Partners S.p.A.**
**Via Senato, 8**
**20121 Milano (IT)**

(56) References cited:
**WO-A1-98/55210          WO-A1-2006/089423
WO-A1-2008/072979     WO-A1-2010/151787
WO-A1-2011/054107     CA-A1- 2 417 483
US-A1- 2003 022 364    US-A1- 2008 159 937
US-A1- 2009 155 889    US-A1- 2010 300 894**

**Description**

**Field of the invention**

The present invention generally relates to the field of enzyme enhanced $CO_2$ desorption processes, and more particularly to carbonic anhydrase enhanced $CO_2$ desorption processes.

**Background**

Increasingly dire warnings of the dangers of climate change by the world's scientific community combined with greater public awareness and concern over the issue has prompted increased momentum towards global regulation aimed at reducing man-made greenhouse gas (GHGs) emissions, most notably carbon dioxide. Ultimately, a significant cut in North American and global $CO_2$ emissions will require reductions from the electricity production sector, the single largest source of $CO_2$ worldwide. According to the International Energy Agency's (IEA) GHG Program, as of 2006 there were nearly 5,000 fossil fuel power plants worldwide generating nearly 11 billion tons of $CO_2$, representing nearly 40% of total global anthropogenic $CO_2$ emissions. Of these emissions from the power generation sector, 61% were from coal fired plants. Although the long-term agenda advocated by governments is replacement of fossil fuel generation by renewables, growing energy demand, combined with the enormous dependence on fossil generation in the near to medium term dictates that this fossil base remain operational. Thus, to implement an effective GHG reduction system will require that the $CO_2$ emissions generated by this sector be mitigated, with carbon capture and storage (CCS) providing one of the best known solutions.

The CCS process removes $CO_2$ from a $CO_2$-containing flue gas, and enables production of a highly concentrated $CO_2$ gas stream which is compressed and transported to a sequestration site. This site may be a depleted oil field or a saline aquifer. Sequestration in ocean and mineral carbonation are two alternate ways to sequester that are in the research phase. Captured $CO_2$ can also be used for enhanced oil recovery, injection into greenhouses, chemical reactions and production, and other useful applications.

Current technologies for $CO_2$ capture are based primarily on the use of solutions which are circulated through two main distinct units: an absorption tower coupled to a desorption (or stripping) tower.

A very significant barrier to adoption of carbon capture technology on large scale is cost of capture. Conventional $CO_2$ capture with available technology, based primarily on the use of monethanolamine (MEA), is an energy intensive process that involves heating the solvent to high temperature to strip the $CO_2$ (and regenerate the solvent) for underground sequestration. The use of MEA involves an associated capture cost of approximately US $60 per ton of $CO_2$ (IPCC), which represents approximately 80% of the total cost of carbon capture and sequestration (CCS), the remaining 20% being attributable to $CO_2$ compression, pipelining, storage and monitoring. This large cost for the capture portion has, to present, made large scale CCS unviable; based on data from the IPCC, for instance, for a 700 megawatt (MW) pulverized coal power plant that produces 4 million metric tons of $CO_2$ per year, the capital cost of MEA based $CO_2$ capture equipment on a retrofit basis would be nearly $800 million and the annual operating cost and plant energy penalty would be nearly $240 million. As such, there is a need to reduce the costs of the process and develop new and innovative approaches to the problem.

In order to help address the high costs associated with traditional CCS systems, biocatalysts have been used for $CO_2$ absorption applications. For example, $CO_2$ transformation may be catalyzed by the enzyme carbonic anhydrase as follows:

$$CO_2 + H_2O \xrightleftharpoons{\text{carbonic anhydrase}} H^+ + HCO_3^-$$

While biocatalysts are known and have been used for absorption of $CO_2$ into a solution, catalyzed desorption methods, which can provide the potential for additional efficiency and cost improvements, have not been greatly studied.

There is a need for a technology that overcomes some of these problems and challenges of known $CO_2$ capture technologies.

**Summary of the invention**

The present invention responds to the above need by providing a carbonic anhydrase enhanced $CO_2$ desorption process.

Accordingly, there is provided an enzyme catalyzed desorption process for releasing $CO_2$ gas from an ion-rich solution containing bicarbonate ions according to claim 1, the process comprising: providing carbonic anhydrase in the ion-rich solution such that in a desorption unit the carbonic anhydrase is allowed to flow with the ion-rich solution while promoting conversion of the bicarbonate ions into $CO_2$ gas and generating an ion-depleted solution; and releasing the $CO_2$ gas and the ion-depleted solution from the desorption unit.

In one optional aspect of the process, a concentration of carbonic anhydrase in the ion-rich solution is controlled by adding an amount of the carbonic anhydrase prior to feeding the ion-rich solution into the desorption unit.

In another optional aspect of the process, the conversion of the bicarbonate ions into $CO_2$ gas is performed in order to promote $CO_2$ bubble formation within the ion-rich solution.

In another optional aspect of the process, the desorption unit comprises a plurality of desorption units arranged in series or in parallel.

The process also includes controlling an initial concentration of the bicarbonate ions in the ion-rich solution below a predetermined denaturation threshold to avoid denaturing the carbonic anhydrase in the desorption unit.

The process also includes controlling the temperature of the ion-rich solution below a predetermined enzymatic denaturing temperature threshold to avoid denaturing the carbonic anhydrase in the desorption unit.

In another optional aspect of the process, the process also includes managing an initial concentration of the bicarbonate ions in the ion-rich solution and temperature of the ion-rich solution, in the desorption unit, to provide rheology that promotes $CO_2$ bubble formation and release from the ion-rich solution.

In another optional aspect of the process, the process also includes the ion-rich solution in the form of a slurry and comprises dispersed precipitates.

In another optional aspect of the process, the process also includes promoting the dissolution of the dispersed precipitates during enzymatic conversion of the bicarbonate ions into $CO_2$ gas, thereby forming additional bicarbonate ions for enzymatic conversion into $CO_2$ gas.

In another optional aspect of the process, the process also includes managing the concentration of the carbonic anhydrase in the desorption unit in accordance with the concentration of bicarbonate ions and the temperature of the ion-rich solution, in order to maximize the desorption rate.

In another optional aspect of the process, the carbonic anhydrase is provided free in solution, immobilized on the surface of solid or porous particles, immobilized within porous particles, entrapped bv particles, in the form of cross-linked enzyme aggregates (CLEAs), or in the form of cross-linked enzyme crystals (CLECs), magnetic particles or a combination thereof.

In another optional aspect of the process, the carbonic anhydrase is provided associated with particles, the particles having a size and a density suitable to be mixable within the ion-rich solution by the $CO_2$ bubble formation.

According to the invention, the ion-rich solution comprises at least one compound selected from the following: primary, secondary and/or tertiary amines; primary, secondary and/or tertiary alkanolamines; primary, secondary and/or tertiary amino acids; and/or carbonates;

According to the invention, the ion-rich solution comprises at least one compound selected from the following: piperidine, piperazine, derivatives of piperidine or piperazine which are substituted by at least one alkanol group, monoethanolamine (MEA), 2-amino-2-methyl-1-propanol (AMP), 2-(2-aminoethylamino)ethanol (AEE), 2-amino-2-hydroxymethyl-1,3-propanediol (TRIS), N-methyldiethanolamine (MDEA), dimethylmonoethanolamine (DMMEA), diethylmonoethanolamine (DEMEA), triisopropanolamine (TIPA), triethanolamine, dialkylether of polyalkylene glycols, dialkylether or dimethylether of polyethylene glycol, amino acids comprising glycine, proline, arginine, histidine, lysine, aspartic acid, glutamic acid, methionine, serine, threonine, glutamine, cysteine, asparagine, valine, leucine, isoleucine, alanine, valine, tyrosine, tryptophan, phenylalanine, and derivatives such as taurine, N,cyclohexyl 1,3-propanediamine, N-secondary butyl glycine, N-methyl N-secondary butyl glycine, diethylglycine, dimethylglycine, sarcosine, methyl tau-rine, methyl-$\alpha$-aminopropionic acid, N-($\beta$-ethoxy)taurine, N-($\beta$-aminoethyl)taurine, N-methyl alanine, 6-aminohexanoic acid and potassium or sodium salts of the amino acids, or a mixture thereof.

In another optional aspect of the process, the absorption solution comprises a carbonate, such as potassium carbonate, sodium carbonate, ammonium carbonate, or mixtures thereof.

In another optional aspect of the process, the absorption solution consists in a mixture of two or more compounds selected from carbonates, amines, alkanolamines and/or amino acids. For instance, the absorption solution may be a combined MDEA-piperazine solution, MDEA-MEA solution, or piperazine-potassium carbonate solution. In one optional aspect, the absorption solution comprises at least one slow absorption compound such as MDEA and at least one fast absorption compound such as MEA. In one optional aspect, the slow-fast compound combination solution is prepared such that the total and relative amounts of the compounds are sufficient so as to improve both the absorption and desorption stages compared to the stage when only one of the compounds is employed. For instance, the use of the slow absorption compound in the mixture improves the desorption efficiency compared to a solution with only fast absorption compound, while the use of the fast absorption compound in the mixture improves the absorption rate in the absorption stage.

It should be understood that the methods and processes defined hereinabove and herein may be combined with any of the additional features described, illustrated or exemplified in herein. For instance, the features of system design and operating conditions referred to herein in the drawings and/or details description may be combined with the concepts and/or embodiments of the present invention and with any one of the concepts and/or embodiments defined in the claims.

In one aspect, in the processes or methods there is a chemical compound which may be a slow absorption compound such as tertiary amines, tertiary alkanolamines, sodium carbonate, potassium carbonate, or at least one amino acid. The slow absorption compound may include a non carbamate-forming solution.

In another aspect, in the processes or methods the carbonic anhydrase or variants or analogues thereof is selected as a single type thereof. The single type of carbonic anhydrase may have similar reaction constants for hydration and dehydration.

In another aspect, in the processes or methods the carbonic anhydrase or variants or analogues thereof is selected to comprise at least two different types thereof. The two different types of carbonic anhydrase may have respectively different reaction rate constants, wherein a first carbonic anhydrase type has a higher hydration reaction rate constant and a second carbonic anhydrase has a higher dehydration reaction rate constant. The second carbonic anhydrase type may also have a higher temperature stability than the first carbonic anhydrase type. The carbonic anhydrase or variants or analogues thereof may be chosen or made pursuant to knowledge that is incorporated herein by reference in several documents; they may be naturally occurring, recombinants, variants, and combinations thereof; many carbonic anhydrase types are known in the art and may be used in connection with the processes, systems and methods of the present invention in accordance with the present disclosure.

In another aspect of the processes or methods, the carbonic anhydrase is provided in an amount sufficient to enable a reduction in energy input compared to use of a carbamate-forming solution. The carbonic anhydrase may be provided in an amount sufficient to enable a reduction in energy input from 10% to 60% compared to use of a carbamate-forming solution. The carbonic anhydrase is provided in an amount sufficient to enable a reduction in energy input from 10% to 60% compared to use of a piperazine.

**Description of the drawings**

Fig 1 is a schematic drawing of an experimental setup for measuring desorption.

Fig 2 is a graph where the complete desorption curves are shown as measured.

Fig 3 is a graph where the slope of the curves is a measure for the initial desorption rates.

Fig 4 is a process flow diagram of an embodiment of the present invention.

Fig 5 is a process flow diagram of another embodiment of the present invention.

Fig 6 is a process flow diagram of yet another embodiment of the present invention.

Fig 7 is a process flow diagram of another embodiment of the present invention.

Fig 8 is a process flow diagram of another embodiment of the present invention.

Fig 9 is a process flow diagram of another embodiment of the present invention.

Fig 10 is a process diagram of the $CO_2$ capture desorption process for simulations.

Fig 11 is a graph of absorber height as a function of turnover factor for simulations.

Fig 12 is a graph of the impact of piperazine concentration on absorber height for simulations.

**Detailed description**

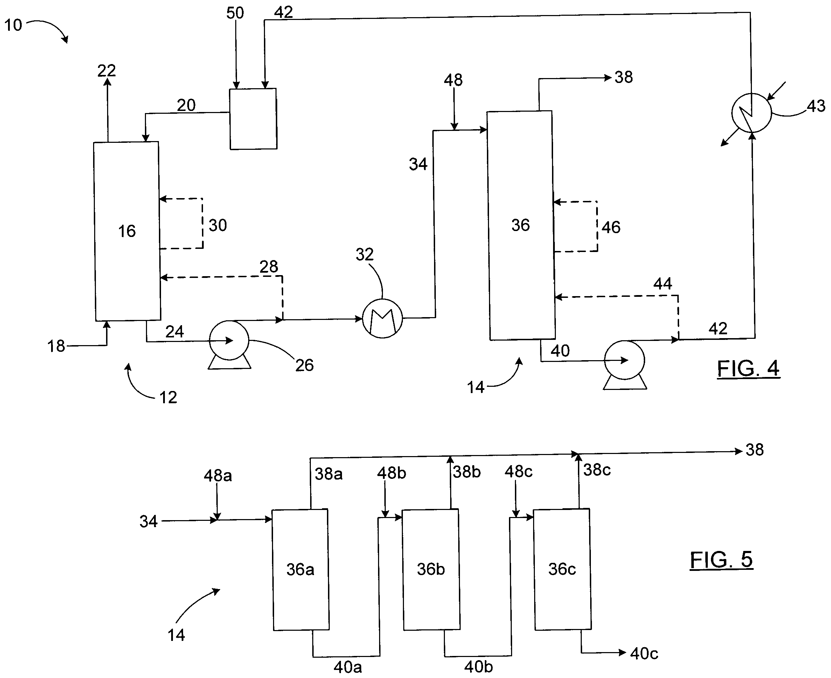

Referring to Fig 4, an overall $CO_2$ capture process 10 is shown and includes an absorption unit 12 and a desorption unit 14. The absorption unit 12 may comprise an absorber reactor 16 which receives a $CO_2$-containing gas 18 that can come from a variety of sources such as power plant flue gas. The absorber reactor 16 also receives an absorption solution 20 (which may also be referred to as a "$CO_2$-lean solution" herein). In the absorber reactor 16, the conversion of $CO_2$ into bicarbonate and hydrogen ions takes place, preferably in the presence of carbonic anhydrase,

thereby producing a $CO_2$-depleted gas 22 and an ion-rich solution 24. Preferably, the absorber reactor 16 is a direct-contact type reactor allowing the gas and liquid phases to contact and mix together. The ion-rich solution 24 may be pumped by a pump 26 to downstream parts of the process, such as heat exchangers, desorption units, regeneration towers and the like. Part of the ion-rich solution 24 may be recycled back to the absorber reactor 16 via an ion-rich solution return line 28, which can improve mixing of the bottoms of the absorber reactor to avoid accumulation of precipitates and reactor deadzones, as the case may be. The absorber 16 may also have other recycle or return lines such as line 30, as desired, depending on operating conditions and reactor design.

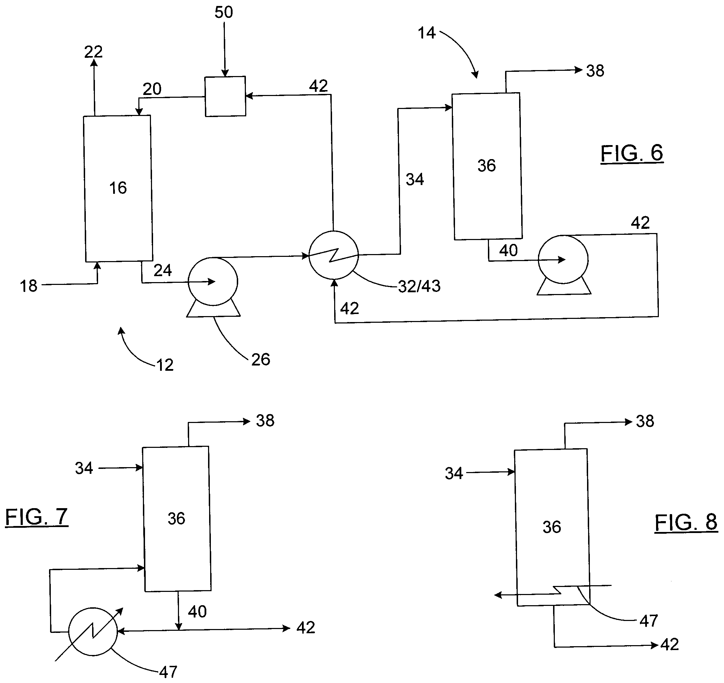

The ion-rich solution 24 is then fed to the desorption unit 14, in which it can be regenerated and a $CO_2$ gas can be separated for sequestration, storage or various uses. The ion-rich solution 24 is preferably heated, which may be done by a heat exchanger 32, to favor the desorption process. Referring to Fig 6, the heat exchanger may use heat contained in one or more downstream process streams in order to heat the ion-rich solution 32, e.g. ion-depleted solution 42. The heated ion-rich solution 34 is fed into a desorption reactor 36. In the desorption unit, carbonic anhydrase is present within the ion-rich solution 34, allowing the carbonic anhydrase to flow with the ion-rich solution 34 while promoting the conversion of the bicarbonate ions into $CO_2$ gas 38 and generating an ion-depleted solution 40. The process also includes releasing the $CO_2$ gas 38 and the ion-depleted solution 40 from the desorption unit 14 and, preferably, sending a recycled ion-depleted solution 42 to make up at least part of the absorption solution 20. The ion-depleted solution 42 is preferably cooled prior to reinjection into the absorption unit, which may be done by a heat exchanger 43. The desorption reactor 36 may also include various recycle or return streams such as streams 44 and 46. Referring to Fig 7-9, the desorption unit 14 may also include one or more reboilers 47,47a,47b each of which takes a fraction of the liquid flowing through a corresponding one of the desorption reactors 36,36a,36b and heats it to generate steam that will create a driving force such that $CO_2$ will be further released from the solution. In some embodiments of the process, absorption is performed around 0°C-70°C, preferably 40°C-60°C, and desorption around 60°C-180°C. In one preferred aspect, the desorption temperature is below 100°C, preferably above 75°C and below100°C, which is particularly adapted for this enzyme enhanced desorption process.

In order to provide the carbonic anhydrase to the ion-rich solution 34 entering the desorption reactor 36, there may be an enzyme feed stream 48 prior to the inlet into the desorption reactor 36. It should be noted that the carbonic anhydrase may be provided in a number of other ways. For instance, carbonic anhydrase may be provided to the absorption solution 20 which flows through the absorber reactor 16 and is not removed from the ion-rich solution 34 which is fed to the desorption reactor 36. In this scenario, the carbonic anhydrase is introduced into the overall $CO_2$ capture process 10 via an absorption solution make-up stream 50, which is preferably mixed with the recycled ion-depleted solution 42. Referring to Fig 5, the carbonic anhydrase may be added to the desorption unit via multiple enzyme feed streams 48a-48c. Depending on operating conditions and the thermal stability of the carbonic anhydrase strain, fraction, variant or analogue that is used in the process, the carbonic anhydrase may be introduced at a given point in the process and spent enzyme may be replaced at a given point in the process. It should also be mentioned that one or more of multiple desorption reactors may have enzyme flowing therethrough, depending for example on the temperature within each reactor, so as to maximize enzyme activity and minimize enzyme denaturing. The enzyme may alternatively be allowed to flow through the entire system to flow through each one of the desorption reactors.

In one optional aspect, a mixture of different enzymes is used: a first enzyme with activity that is optimal for $CO_2$ hydration reactions taking place in the absorption unit and a second enzyme with activity that is optimal for $CO_2$ dehydration taking place in the desorption unit, each enzyme being robust to operating conditions encountered in the absorption and desorption units.

Regarding delivery of the enzyme to the process, the enzyme is preferably provided directly as part of a formulation or solution. There may also be enzyme provided in a reactor to react with incoming solutions and gases; for instance, the enzyme may be fixed to a solid non-porous packing material, on or in a porous packing material, on or in particles flowing with the absorption solution within a packed tower or another type of reactor. The carbonic anhydrase may be in a free or soluble state in the formulation or immobilised on particles within the formulation. It should be noted that enzyme used in a free state may be in a pure form or may be in a mixture including impurities or additives such as other proteins, salts and other molecules coming from the enzyme production process. Immobilized enzyme free flowing in the solutions could be entrapped inside or fixed to a porous coating material that is provided around a support that is porous or non-porous. The enzymes may be immobilised directly onto the surface of a support (porous or non porous) or may be present as CLEAs or CLECs. CLEA comprise precipitated enzyme molecules forming aggregates that are then crosslinked using chemical agents. The CLEA may or may not have a 'support' or 'core' made of another material which may or may not be magnetic. CLEC comprise enzyme crystals and cross linking agent and may also be associated with a 'support' or 'core' made of another material. When a support is used, it may be made of polymer, ceramic, metal(s), silica, solgel, chitosan, cellulose, alginate, polyacrylamide, magnetic particles and/or other materials known in the art to be suitable for immobilization or enzyme support. When the enzymes are immobilised or provided on particles, such as micro-particles, the particles are preferably sized and provided in a particle concentration such that they are pumpable with the solution throughout the process.

When the enzymes are provided on particles, the particles may be sized in a number of ways.

In some embodiments, the particles may be micro-particles, which may be sized to facilitate separation of the micro-particles from the ion-rich mixture. For instance, the micro-particles may be sized to have a diameter above about 1 $\mu$m or above about 5 $\mu$m. The micro-particles may also be sized to have a catalytic surface area comprising the biocatalysts having an activity density so as to provide an activity level equivalent to a corresponding activity level of soluble biocatalysts above about 0.05 g biocatalyst /L, optionally between about 0.05 g biocatalyst /L and about 2 g biocatalyst /L, and preferably between about 0.05 g biocatalyst /L and about 0.5 g biocatalyst /L, or up to 5 g biocatalyst /L, for the case of biocatalysts having a minimum activity of about 260 WA units/mg. Furthermore, the absorption solution and the $CO_2$ form a reactive liquid film having a thickness and the micro-particles may be sized so as to be within an order of magnitude of the thickness of the reactive liquid film. The micro-particles may also be sized so as to be smaller than the thickness of the reactive liquid film. The thickness of the reactive liquid film may be about 10 $\mu$m. In another optional aspect, the micro-particles are sized between about 1 $\mu$m and about 100 $\mu$m. It should also be noted that precipitates may be formed in the ion-rich solution and the micro-particles may be sized to be larger or heavier than the precipitates or to be easily separable therefrom. In some optional aspects of the process, the particles may be sized so as to be nano-particles. In some optional aspect of the process, the micro-particles may have an activity density of at least about 0.06 WA/mm$^2$, optionally of about 0.5 WA/mm$^2$ or more. The micro-particles may also be provided in the absorption solution at a maximum particle concentration of about 40% w/w. In some optional aspects, the maximum micro-particle concentration may be 35% w/w, 30% w/w, 25% w/w, 20% w/w, 15% w/w, 10% w/w, or 5% w/w, 2% w/w, or 1% w/w. The micro-particles may be composed of support material(s) that is at least partially composed of nylon, cellulose, silica, silica gel, chitosan, polystyrene, polymethylmetacrylate, alginate, polyacrylamide, magnetic material, or a combination thereof. The support may preferably be composed of nylon. The density of the support material may be between about 0.6 g/ml and about 6 g/ml.

In other embodiments, the particles are sized and provided in a concentration such that the particles are smaller, preferably substantially smaller, than the thickness of the reactive film. The reactive film may be defined in the absorption stage or the desorption stage of the overall $CO_2$ capture process or may be an average or approximation between the two stages.

The particles may be sized to facilitate separation of the particles from the ion-rich mixture. The enzymatic particles may be sized to have a diameter at or below about 15 $\mu$m. Optionally, the particles are sized to have a diameter at or below about 10 $\mu$m. Optionally, the particles are sized to have a diameter at or below about 5 $\mu$m. Optionally, the particles are sized to have a diameter at or below about 1 $\mu$m. Optionally, the particles are sized to have a diameter at or below about 0.5 $\mu$m. Optionally, the particles are sized to have a diameter at or below about 0.2 $\mu$m. Optionally, the particles are sized to have a diameter at or below about 0.1 $\mu$m. In some preferred embodiments, depending on the thickness of the reactive film of given process operating parameters and conditions, the particles are sized to have a diameter of about 0.001 $\mu$m, 0.005 $\mu$m, 0.01 $\mu$m, 0.05 $\mu$m, 0.1 $\mu$m, 0.15 $\mu$m, 0.2 $\mu$m, 0.25 $\mu$m, 0.3 $\mu$m, 0.35 $\mu$m, 0.4 $\mu$m, 0.45 $\mu$m, 0.5 $\mu$m, 0.55 $\mu$m, 0.6 $\mu$m, 0.65 $\mu$m, 0.7 $\mu$m, 0.75 $\mu$m, 0.8 $\mu$m, 0.85 $\mu$m, 0.9 $\mu$m, 0.95 $\mu$m, 1 $\mu$m, 1.05 $\mu$m, 1.1 $\mu$m, 1.15 $\mu$m, 1.2 $\mu$m, 1.25 $\mu$m, 1.3 $\mu$m, 1.35 $\mu$m, 1.4 $\mu$m, 1.45 $\mu$m, 1.5 $\mu$m, 1.55 $\mu$m, 1.6 $\mu$m, 1.65 $\mu$m, 1.7 $\mu$m, 1.75 $\mu$m, 1.8 $\mu$m, 1.85 $\mu$m, 1.9 $\mu$m, 1.95 $\mu$m or 2 $\mu$m or a diameter in between any two of the aforementioned values. In some optional embodiments, the particles are sized to have a diameter about one to about four orders of magnitude below the reactive film thickness. The particles are preferably sized so as to be at least about two orders of magnitude smaller than the thickness of the reactive film.

The particles may be made, sized and used as described in US provisional patent application No. 61/439,100 which is incorporated herein by reference.

Enzymes may also be provided both fixed within the reactor (on a packing material, for example) and flowing with the formulation (as free enzymes, on particles and/or as CLEA or CLEC), and may be the same or different enzymes, including carbonic anhydrase. One of the ways carbonic anhydrase enhances performance of $CO_2$ capture solutions in the desorption unit is by reacting with dissolved bicarbonate ions and maintaining a maximum $CO_2$ concentration gradient between gas and liquid phases to improve $CO_2$ transfer rate from the liquid solution phase to the gas phase. When the incoming ion-rich solution 34 also comprises carbonate/bicarbonate precipitates, which are solids that make the ion-rich solution 34 a slurry-like consistency, the carbonic anhydrase flowing with the ion-rich solution 34 is able to enhance performance in the desorption unit by reacting with dissolved bicarbonate ions and maintaining a maximum bicarbonate ion concentration gradient between solid and liquid phases to improve carbonate/bicarbonate transfer rate from the solid phase into the liquid solution phase thus promoting the dissolution of the precipitates. In some cases, the ion-rich solution 24 exiting the absorption unit may be treated by removing excess liquid and thus pre-concentrating the solids prior to the desorption unit, and the removed liquid stream (not illustrated) can be recycled back into the process, e.g. back into stream 42. The carbonic anhydrase includes any analogue, fraction and variant thereof and may be alpha, gamma or beta type from human, bacterial, fungal or other organism origins, having thermostable or other stability properties, as long as the carbonic anhydrase can be provided to function in the $CO_2$ capture or desorption processes to enzymatically catalyse the reaction:

$$CO_2 + H_2O \xrightleftharpoons{carbonic\ anhydrase} H^+ + HCO_3^-$$

In some aspects of the process, different types of absorption solutions may be used: amine solutions, carbonate solutions, amino acid solutions, and so on.

The absorption solution may comprise a chemical compound for enhancing the $CO_2$ capture process. For instance, the ion-rich solution may further contain at least one compound selected from the following: piperidine, piperazine, derivatives of piperidine or piperazine which are substituted by at least one alkanol group, monoethanolamine (MEA), 2-amino-2-methyl-1-propanol (AMP), 2-(2-aminoethylamino)ethanol (AEE), 2-amino-2-hydroxymethyl-1,3-propanediol (Tris), N-methyldiethanolamine (MDEA), dimethylmonoethanolamine (DMMEA), diethylmonoethanolamine (DEMEA), triisopropanolamine (TIPA), triethanolamine, dialkylether of polyalkylene glycols, dialkylether or dimethylether of polyethylene glycol, amino acids comprising glycine, proline, arginine, histidine, lysine, aspartic acid, glutamic acid, methionine, serine, threonine, glutamine, cysteine, asparagine, leucine, isoleucine, alanine, valine, tyrosine, tryptophan, phenylalanine, and derivatives such as taurine, N,cyclohexyl 1,3-propanediamine, N-secondary butyl glycine, N-methyl N-secondary butyl glycine, diethylglycine, dimethylglycine, sarcosine, methyl taurine, methyl-$\alpha$-aminopropionic acid, N-($\beta$-ethoxy)taurine, N-($\beta$-aminoethyl)taurine, N-methyl alanine, 6-aminohexanoic acid and potassium or sodium salts of the amino acids, or mixtures thereof.

The solution may be a carbonate-based solution, such as potassium carbonate solution, sodium carbonate solution, ammonium carbonate solution, promoted potassium carbonate solutions, promoted sodium carbonate solutions or promoted ammonium carbonates; or mixtures thereof. These carbonate-based solution may be promoted with one or more of the above-mentioned chemical compounds.

Regarding the selection of chemical compounds for use in the $CO_2$ capture solution, it may be preferred to have compounds facilitating desorption efficiency. For instance, it should be noted that the reaction mechanisms between primary/secondary amines and tertiary amines with $CO_2$ in absorption/desorption are different. The reaction between $CO_2$ and primary/secondary amines is significantly faster than the reaction between $CO_2$ and tertiary amines. As a result of the faster reaction the absorption column may be shorter when primary/secondary amines are used. However, the advantage of tertiary amines is that the regeneration energy is significantly lower than the regeneration energy of primary/secondary amines. As a result of the lower regeneration energy of tertiary amines, the costs for desorption/stripping is less. It would be advantageous to have a combination of both fast absorption and low regeneration energy. In one aspect, one may use carbonic anhydrase enhanced absorption with a low desorption energy compound, such as tertiary amines, which facilitate lower energy requirements for desorption and lower temperatures, which can also reduce or avoid denaturing of the carbonic anhydrase and enable use of a smaller desorption tower. In another aspect, one may use a fast absorption compound, such as primary and/or secondary amines for enhanced absorption, with carbonic anhydrase enhanced desorption to lower the energy requirements for the primary/secondary amine solution regeneration.

In another aspect, the enzyme carbonic anhydrase is provided to flow with the solution throughout the process, to not only accelerate the transformation of $CO_2$ to $HCO_3^-$, but also the reverse reaction, which is of major importance during the regeneration of the $CO_2$ loaded solution (also referred to as "carbonate loaded solution" or "ion-rich solution" herein).

In further aspects of the process, the ion-rich solution may contain from about 0.1 M to 8 M of bicarbonate ions. The carbonate loading of the solution will depend on the operating conditions, reactor design and the chemical compounds that are added. For instance, when potassium or sodium bicarbonate compounds are used in the absorption solution, the ion-rich solution may contain from about 0.5 M to 1.5 M of bicarbonate ions and when other compounds such as tertiary amines are used the ion-rich solution may contain from about 1 M to 8 M of bicarbonate ions. When the ion-rich solution is highly loaded with carbonate/bicarbonate ions, it may become much more viscous which can have a detrimental effect of mass transport within the solution. The presence of carbonic anhydrase flowing with the solution further enhances the mass transport along with the enzymatic reaction, thus improving the desorption unit and overall $CO_2$ capture process, for instance by supersaturating the solution with bubbles of gaseous $CO_2$. In addition, temperatures in the desorption unit may range between about 0°C and about 150°C, for example.

The invention also provides a method of decreasing the $CO_2$ desorption temperature in a desorption unit, decreasing the $CO_2$ desorption reactor size and decreasing the $CO_2$ desorption energy input in a desorption unit. By using carbonic anhydrase in the solution, these system design parameters can be modified to give a more efficient process. Decreasing the temperature and energy input may be realized in a retrofitting of an existing desorption reactor, while new desorption reactors may be built so as to have a smaller size than would have been required.

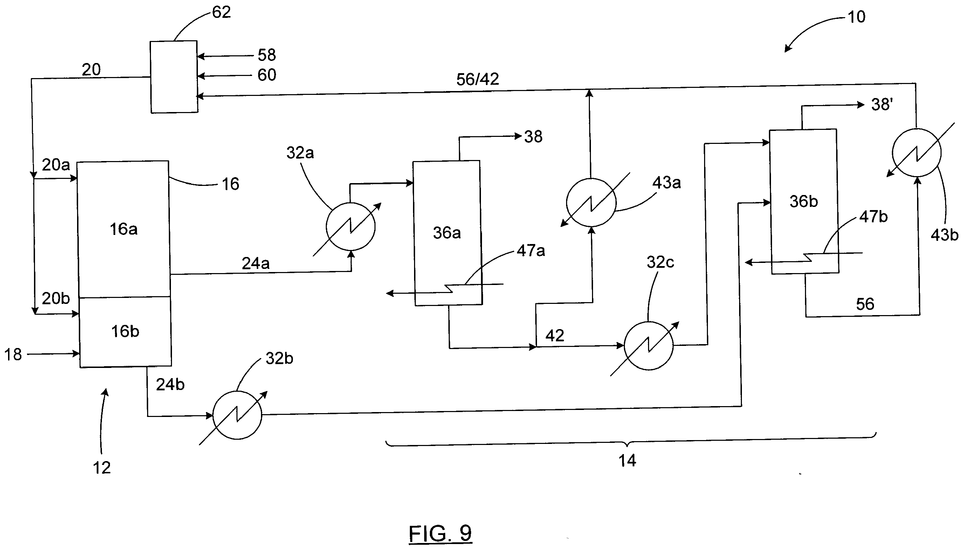

Referring now to Fig 9, the $CO_2$ capture process may also have other process streams, arrangements and units as compared to the embodiment shown in Fig 4, for example. The absorption reactor 16 can take the form of a packed reactor, fluidized bed reactor, spray tower including multiple units, and can receive the absorption solution 20 via lines 20a and/or 20b.

The ion-rich solution 24 can be released from the absorption reactor 16 through one or more streams, for instance streams 24a and 24b. One of the streams may be fed into a first desorption reactor 36a, such as stream 24a in Fig 9. One of the streams may be fed into a second desorption reactor 36b which may be a similar or different type of reactor compared to 36a, depending on the ion concentrations in the inlet streams and levels of desorption to be attained. The second desorption reactor 36b may therefore receive a solution containing bicarbonate ions and carbonic anhydrase, and the ions contained in the solution are released in the form of gaseous $CO_2$ 38' and the solution is regenerated and released in the form of an ion-lean solution 56. The second desorption reactor 36b may be fed with two streams (24b and 42 in Fig 9). The streams are preferably hot and the streams that are leaner in $CO_2$ are fed at a lower entry level. Heat exchangers 32a, 32b, 32c may be used to heat the streams 24a, 24b, 42 prior to feeding into one of the desorption reactors. Different ion-containing streams can be withdrawn from different sub-sections of the absorption reactor 16a, 16b, and fed to a sub-unit of the first or second desorption reactor according to its concentration and temperature. The regenerated solution 56 is then recycled through a circulation pump above system pressure to the absorption reactor 16 and may be combined with the ion-lean solution 42 released from the first desorption reactor 36a. The streams 42 and 56 may be metered and mixed together to form a combined regenerated stream 56/42, depending on operating requirements of the absorption unit 12. Streams 42 and 56 are preferably cooled using heat exchangers 43a, 43b prior to recycling to the absorption unit 12. It should be noted that the heat exchanging in units 32a, 32b, 32c, 43a, 43b can be combined as shown in Fig 6 as exchanger 32/43, to use hot and cool streams of the process to heat and cool each other, for increased overall efficiency. Fresh water 58 can be added in order to compensate for the natural evaporation losses. There may also be a fresh carbonic anhydrase make-up stream 60, which may be in an aqueous or dry form. Streams 58, 60 and 56/42 may be mixed with an appropriate mixing device 62 prior to being fed into the absorption unit 12.

The desorption reactor 36 may be in the form of a column and may be provided with a plurality of units and liquid inlets. Figs 5 and 9 show how multiple desorption reactors may be used in various configurations in order to desorb the $CO_2$ and recycle various streams back into the process. The desorption reactor 36 contains in the incoming liquid carbonic anhydrase which catalyses the reverse reaction from bicarbonate ions to gaseous $CO_2$, at lower pressure and higher temperature.

The $CO_2$ streams 38, 38' are preferably captured, stored and/or used for any number of uses such as industrial, agricultural, enhanced oil recovery, and so on.

The processes of the present invention are applicable to a variety of industries and purposes. For instance, the process can be used to remove $CO_2$ gas from mixed gases such as power plant flue gases, industrial effluent gases in order to bring such gases within specifications or certain limits, biogas for improving it to natural gas quality, air, and so on. The isolated $CO_2$ gas can be used for industrial, petrochemical and/or agricultural uses, such as enhanced oil recovery and supplying to greenhouses.

The desorption reactions $H^+ + HCO_3^- \rightarrow H_2O + CO_2$ and $HCO_3^- \rightarrow CO_2 + OH^-$ may occur and the desorption reaction $H^+ + HCO_3^- \rightarrow H_2O + CO_2$ is catalyzed by the enzyme carbonic anhydrase. Under optimum conditions, the catalyzed turnover rate of this reaction may reach $2 \times 10^5$ to $6 \times 10^5$ $s^{-1}$. In some embodiments of the present invention, this provides for the ability to efficiently utilize alternative solvents, which would normally be too kinetically limited for efficient $CO_2$ capture, but which have lower energies of regeneration, such as tertiary alkanolamines, carbonates and amino acids. Due to this, carbonic anhydrase can provide for potentially significant energy and cost savings.

## Experiments & Examples

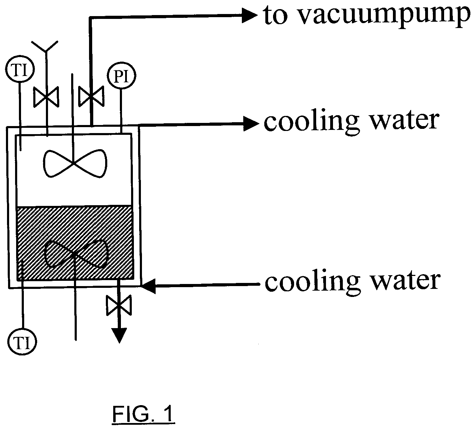

Several experiments were conducted on $CO_2$ desorption with carbonic anhydrase. A schematic presentation of the setup that was used is given in Figure 1. The reactor consisted of glass and stainless steel metal, was thermostated to within $\pm$ 0.1 K, and provided with 2-blade independently controlled stirrers in the gas and the liquid phase at fixed positions inside the reactor. Both the reactor and the gas supply vessel were equipped with PT-100 temperature sensors and high precision pressure transducers (Heise Model DXD, range 0-2 bara). The maximum stirrer speed at which a visual smooth interface could still be maintained for the type of stirrers used was at about 155 revolutions per minute (rpm).

Both the gas and liquid phase were operated batch-wise. At the start of each run, a known amount of a solution with known composition (see Table 1) was introduced into the reactor and the liquid phase stirrer was turned on at approx 155 rpm. The solution was degassed for a period of time in order to remove any dissolved gases. Next the solution was allowed to equilibrate at the set temperature (10 °C) and its vapor pressure. This temperature was used in order to ensure that the particular carbonic anhydrase that was used was not denatured. After equilibration, the valve between the vacuum pump and the reactor was carefully opened for a very short time, and some of the gaseous component was transferred from the reactor by means of the pressure difference. At the same time, some of the solvent vapor present in the gas phase was transferred along with the gaseous component. The removed solvent vapor was however replaced within a few seconds by the liquid solvent, and any very small change in the concentration of the solvent can be neglected. The sudden pressure decrease in the reactor was followed by a slow pressure increase of the gaseous compound (mostly $CO_2$) from the liquid phase into the gas phase until phase equilibrium was reached.

Possible reactions responsible for the liberation of $CO_2$ from the bicarbonate solution are:

$$HCO_3^- + H_3O^+ \rightarrow CO_2 + 2H_2O$$

$$HCO_3^- \rightarrow CO_2 + OH^-$$

*Table 1: Composition of the solutions used during the various runs*

| Run | NaHCO$_3$ [M] | Enzyme [mg/l] |
|-----|---------------|---------------|
| 1 | 1 | 0 |
| 2 | 1 | 100 |
| 3 | 1 | 500 |

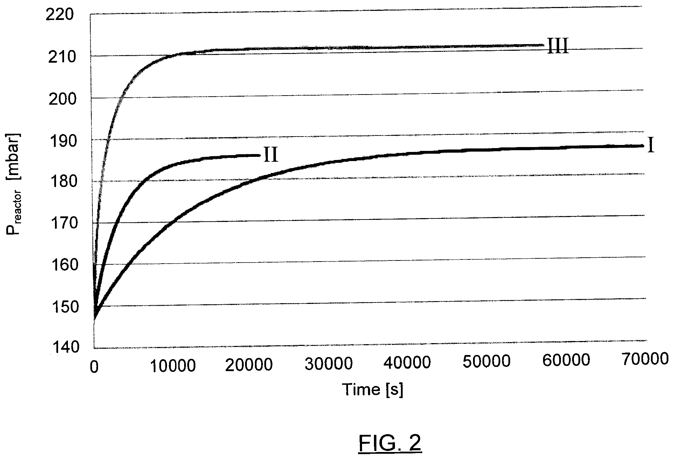

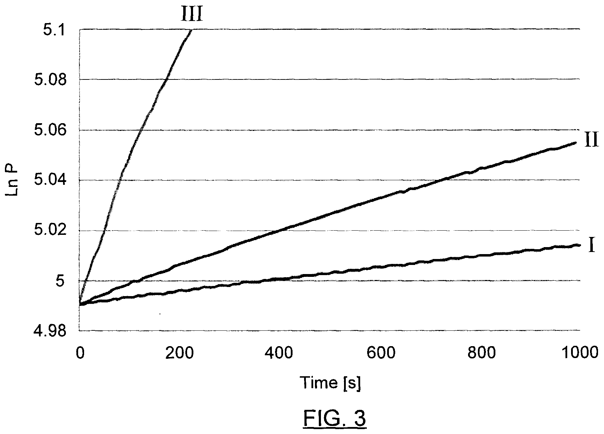

Next, Figures 2 and 3 graphically present the results of three comparative runs. The "I" line shows the desorption of $CO_2$ desorption from a degassed 1 M NaHCO$_3$ solution in absence of enzyme. The "II" line shows the desorption of $CO_2$ in presence of 100 mg/l enzyme. The "III" line shows the results of the desorption of $CO_2$ in presence of 500 mg/l enzyme. All runs were performed with a 1 M NaHCO$_3$ solution at 10 °C.

During runs 1 and 2, the pressure was decreased with 60-65 mbar, while during run 3 the pressure was decreased with 100 mbar. This larger decrease in combination with the higher amount of enzyme present in the solution resulted in the formation of a bubble layer at the gas-liquid interface.

Figure 3 shows that the initial desorption rate in presence of the enzyme is faster than in absence of enzyme. Addition of 100 mg/l carbonic anhydrase to a 1 M sodium bicarbonate solution resulted in an increase of the enhancement factor for desorption by a factor of approximately 3. Addition of a larger amount of enzyme gave an even larger increase and also resulted in a layer of bubbles being present on the gas-liquid interface directly after the pressure decrease.

Examples of enzyme enhanced $CO_2$ capture and desorption are presented below.

### Example: carbonic anhydrase impact on desorber size

From the results shown in Figs 2 and 3, it is clear that adding carbonic anhydrase to a bicarbonate containing solution increases the rate of $CO_2$ removal from the solution. This can be explained by the carbonic anhydrase catalyzing the transformation of bicarbonate ions into $CO_2$. The produced $CO_2$ gas diffuses back into the gas phase, contacting the bicarbonate containing solution, given that the $CO_2$ partial pressure in the gas phase is lower than the CO2 partial pressure that would be in equilibrium with the carbonate/bicarbonate content of the solution. The results also show that adding higher enzyme concentration to the solution resulted in a faster $CO_2$ production rate from the solution. This may indicate an association to a larger transformation rate of bicarbonate ions to $CO_2$.

Furthermore, increasing the enzyme concentration resulted in a higher $CO_2$ pressure in the gas phase, indicating that more bicarbonate ions were converted into $CO_2$ in the solution and diffused back in the gas phase and as a result the bicarbonate concentration in the solution with the higher enzyme concentration is lower than for the 100 mg/L and 0 mg/L concentrations.

Applying this for a desorption unit means that if a bicarbonate containing solution is fed to a given desorber, with specific dimensions and operating conditions, bicarbonate removal rate is higher when enzyme is used and a higher enzyme concentration will result in a higher bicarbonate removal rate, given of course that the desorber efficiency is not 100%.

In another way, given that the overall bicarbonate reaction rate is faster in presence of the enzyme, if a desorber with a height of H1 is required without enzyme to reach a given $CO_2$ desorption rate, having the enzyme present in a concentration E2 will result in a smaller desorber having a height of H2 where H1 > H2. If an enzyme concentration E3 (higher than E2) is used, then the required desorber with have a height H3 such that H3 < H2 <H1, similarly to what has been found on the absorber side of the process. The solution would preferably contain compounds that are known to absorb and stock $CO_2$ in the form of bicarbonate ions such as sodium carbonate, potassium carbonate, tertiary amine like MDEA and tertiary amino acid such as diethylglycine, dimethylglycine and sarcosine.

### Example : carbonic anhydrase impact on energy requirement

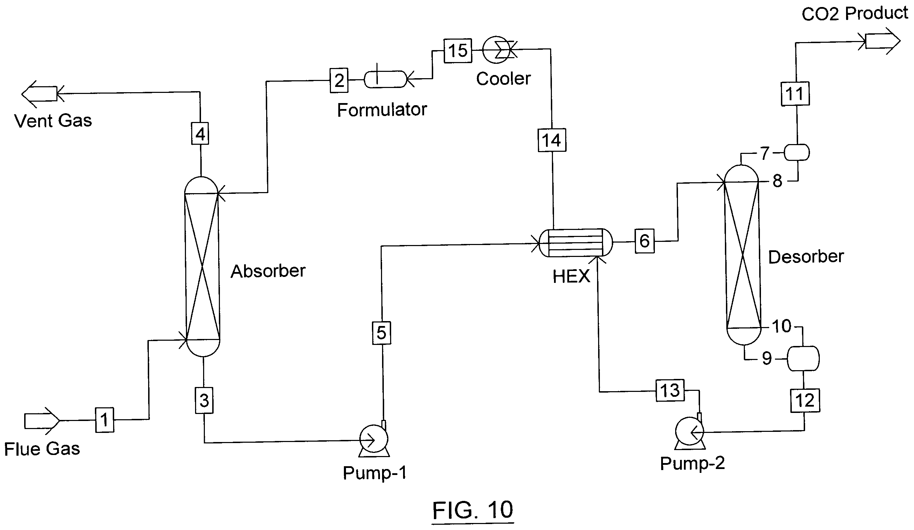

Simulations were run to demonstrate the impact of carbonic anhydrase on absorber height and energy requirement in a $CO_2$ capture desorption process. Figure 10 is a representative drawing of the simulation. Two systems were considered for the simulation: MDEA with enzyme and MDEA with piperazine. Piperazine is used in combination with MDEA because MDEA alone is too slow a solution that would result in huge absorber height. However, piperazine reacts with $CO_2$ and forms carbamate that requires high energy requirement for breaking them and releasing $CO_2$ in the desorption stage.

Simulation parameters were the following:

| | |
|---|---|
| Power Plant Gross Output | 827 MW |
| $CO_2$ Production | 624 Tonnes/h |
| $CO_2$ removal | 90% |
| Gas flow rate | 855.2 m3/s |
| Temperature | 40°C |
| Pressure | 1 bar |
| $CO_2$ concentration | 12 mol% |
| $H_2O$ | 7 mol% |
| $O_2$ | 4 mol% |
| $N_2$ | 77 mol% |
| Ab. Comp. concentration | 2 mol/L |

For the case where MDEA is used with enzyme; MDEA concentration was 2M. For the MDEA and Piperazine solution, the total concentration of MDEA and piperazine was 2M.

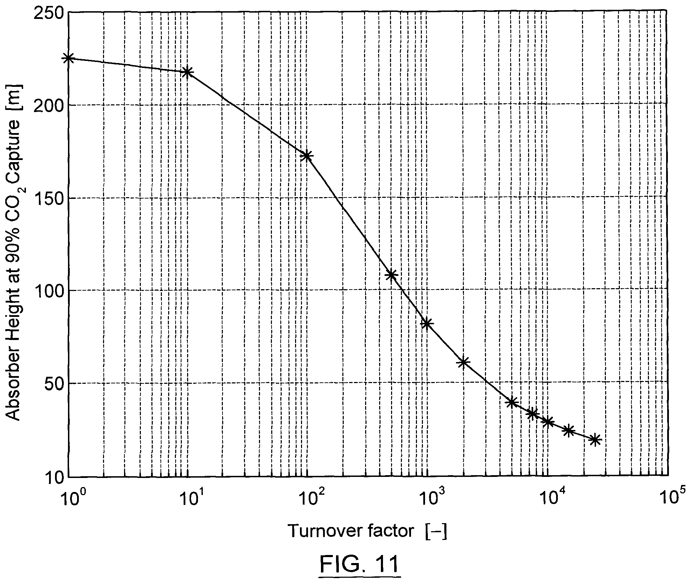

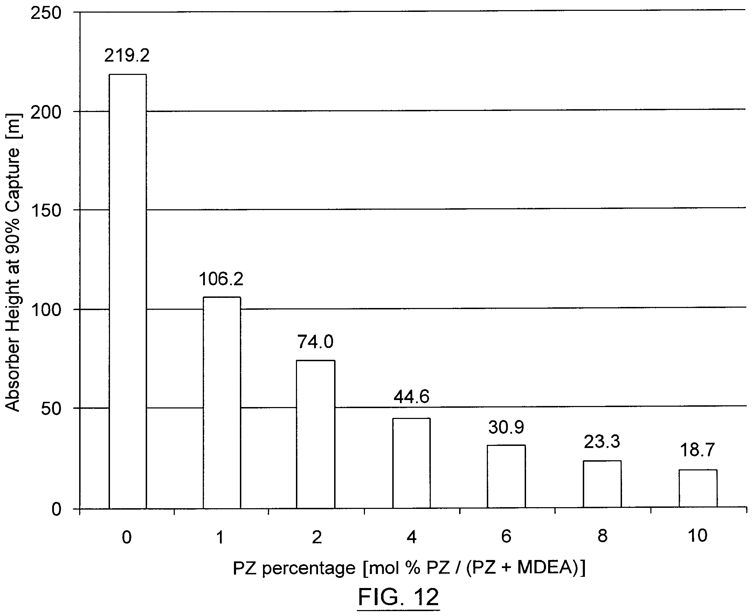

Simulations were first conducted to compare absorber height for different scenarios with enzyme and with piperazine. Results are shown in Figures 11 and 12. Figure 11 shows data where absorber height is reported as a function of turnover factor. The turnover factor corresponds to the enhancement factor of the $CO_2$ hydration reaction when the enzyme is present. It can be calculated by the following equations:

$$CO_2 + 2H_2O \underset{k_{-1}}{\overset{k_1}{\longleftrightarrow}} HCO_3^- + H_3O^+$$

$$k_1 = factor \cdot k_0 \cdot \exp\left(-\frac{T_a}{T}\right)$$

$k_0 = 4.0379 \cdot 10^9 \ s^{-1}$
$T_a = 7707 \ K$

If no enzyme is present, the turnover factor (or factor) is equal to 1 and the reaction rate constant $k_1$ is the same as the physico-chemical reaction. In the graph of Figure 11, it is shown that absorber height is significantly reduced when increasing the turnover factor. Results not reported here, have shown that Turnover factor can be increased by using higher enzyme concentration but also by using different enzymes or analogues.

The results obtained for piperazine also indicate that increasing piperazine concentration leads to a reduction of the absorber height. For a piperazine concentration of 10% (0.2 M), absorber height is 18.7 m, which is similar to the height of the absorber obtained with a turnover factor of 25,000. This turnover factor was corresponding to an enzyme concentration of 0.4 g/L of human carbonic anhydrase type II or to 1 g/L of an enzyme variant. So, it is seen that different enzymes used at different concentrations can result in a same turnover factor.

In a second step, simulations were run to model the $CO_2$ capture desorption process shown in Figure 1 for the enzyme-MDEA and the piperazine-MDEA cases in conditions corresponding to an absorber height of 18.7 m. Results indicated that using the enzyme enables a 30% reduction in the energy consumption as compared to the piperazine-MDEA solution. This confirms that using the enzyme in combination with MDEA is easier and more energy efficient to regenerate mainly because captured $CO_2$ is in the form of bicarbonate/carbonate ions depending on the pH of the solution whereas the piperazine-MDEA solution also contains carbamate which requires higher energy to be released from the solution. The findings of this example can also be extrapolated to other "slow" absorption solutions that have also been used in combination with absorption activators like piperazine and MEA. Some examples of such "slow" solutions that can be used with carbonic anhydrase to achieve energy efficiencies in desorption are, tertiary alkanolamines such as MDEA, DMMEA, DEMEA, TIPA and TEA, sodium carbonate, potassium carbonate, and amino acids such as N-secondary butyl glycine, N-methyl N-secondary butyl glycine, diethylglycine, dimethylglycine, sarcosine, methyl taurine, methyl-α-aminopropionic acid, N-(β-ethoxy)taurine, N-(β-aminoethyl)taurine, N-methyl alanine, 6-aminohexanoic acid and potassium or sodium salts of the amino acids.

The following references describe additional aspects that may be combined with those described herein: PCT/CA2010/001212, PCT/CA2010/001213, PCT/CA2010/001214, US 6.908.507, US 7.176.017, US 6.524.843, US 6.475.382, US 6.946.288, US 7.596.952, US 7.740.689, US 7.514.056, US 7.521.217, US 61/272.792, US 61/439,100 which are all currently held by the Applicant. The reactors and processes described in the preceding references may be used in connection with the processes described herein.

**Claims**

1. An enzyme catalyzed desorption process for releasing $CO_2$ gas from an ion-rich solution containing bicarbonate ions, the process comprising:

   providing carbonic anhydrase or variants or analogues thereof in the ion-rich solution such that in a desorption unit the carbonic anhydrase or variants or analogues thereof is allowed to flow with the ion-rich solution while promoting conversion of the bicarbonate ions into $CO_2$ gas and generating an ion-depleted solution;
   controlling an initial concentration of the bicarbonate ions in the ion-rich solution below a denaturation threshold to avoid or reduce denaturing the carbonic anhydrase in the desorption unit;
   controlling a temperature of the ion-rich solution below an enzymatic denaturing temperature threshold to avoid denaturing the carbonic anhydrase in the desorption unit; and
   releasing the $CO_2$ gas and the ion-depleted solution from the desorption unit;
   wherein the ion-rich solution comprises at least one compound selected from the following: tertiary amines, tertiary alkanolamines, tertiary amino acids, carbonates, 2-amino-2-methyl-1-propanol (AMP), 2-amino-2-hydroxymethyl-1,3-propanediol (TRIS), and derivatives of piperidine or piperazine which are substituted by at least one alkanol group; and
   wherein the carbonic anhydrase is provided in an amount sufficient to enable a reduction in regeneration energy from 10% to 60% compared to use of a carbamate-forming solution.

2. The process of claim 1, comprising regulating a concentration of carbonic anhydrase in the ion-rich solution by adding an amount of the carbonic anhydrase prior to feeding the ion-rich solution into the desorption unit.

3. The process of claim 1 or 2, wherein the conversion of the bicarbonate ions into the $CO_2$ gas is performed under conditions to promote $CO_2$ bubble formation within the ion-rich solution.

4. The process of any one of claims 1 to 3, comprising controlling rheology of the ion-rich solution to promote $CO_2$ bubble formation and release from the ion-rich solution, the rheology being preferably controlled by managing an initial concentration of the bicarbonate ions in the ion-rich solution and an initial temperature of the ion-rich solution.

5. The process of any one of claims 1 to 4, wherein the ion-rich solution is in the form of a slurry comprising dispersed precipitates, the process comprising promoting dissolution of the dispersed precipitates during the conversion of the bicarbonate ions into the $CO_2$ gas, thereby forming additional bicarbonate ions for enzymatic conversion into the $CO_2$ gas.

6. The process of any one of claims 1 to 5, comprising managing the concentration of the carbonic anhydrase in the desorption unit in accordance with the concentration of bicarbonate ions and the temperature of the ion-rich solution, in order to increase the desorption rate.

7. The process of any one of claims 1 to 6, wherein the carbonic anhydrase is provided free in solution, associated with particles, immobilized on the surface of solid or porous particles, immobilized within porous particles, entrapped by particles, in the form of cross-linked enzyme aggregates (CLEAs), in the form of cross-linked enzyme crystals (CLECs), or supported by magnetic particles, or a combination thereof.

8. The process of any one of claims 1 to 6, wherein the carbonic anhydrase is provided associated with particles, the particles having a size and a density suitable to be mixable within the ion-rich solution by the $CO_2$ bubble formation.

9. The process of any one of claims 1 to 8, wherein the at least one compound is selected from N-methyldiethanolamine (MDEA), dimethylmonoethanolamine (DMMEA), diethylmonoethanolamine (DEMEA), triisopropanolamine (TIPA), triethanolamine, and from potassium carbonate and sodium carbonate.

10. The process of any one of claims 1 to 9, wherein the desorption unit comprises a plurality of desorption vessels arranged in series or in parallel.

11. The process of any one of claims 1 to 8, wherein the at least one compound is selected from tertiary amino acids.

12. The process of any one of claims 1 to 8, wherein the at least one compound is selected from N-secondary butyl glycine, N-methyl N-secondary butyl glycine, diethylglycine, and dimethylglycine, and potassium or sodium salts of the amino acids.

13. The process of any one of claims 1 to 8, wherein the at least one compound is selected from tertiary alkanolamines.

14. The process of any one of claims 1 to 8, wherein the at least one compound is selected from tertiary amines.


**Patentansprüche**

1. Enzymkatalysiertes Desorptionsverfahren zur Freisetzung von $CO_2$-Gas aus einer Ionen-reichen Lösung, die Bicarbonationen enthält, wobei das Verfahren umfasst:
   Bereitstellen von Carboanhydrase oder Varianten oder Analoga davon in der Ionen-reichen Lösung, so dass in einer Desorptionseinheit die Carboanhydrase oder Varianten oder Analoga davon mit der Ionen-reichen Lösung fließen kann, während die Umwandlung der Bicarbonationen in $CO_2$-Gas gefördert wird und eine Ionenabgereicherte Lösung erzeugt wird;
   Regulieren einer Anfangskonzentration der Bicarbonationen in der Ionen-reichen Lösung unterhalb eines Denaturierungs-Schwellenwerts, um Denaturieren der Carboanhydrase in der Desorptionseinheit zu vermeiden oder zu reduzieren;
   Regulieren einer Temperatur der Ionen-reichen Lösung unterhalb eines enzymatischen Denaturierungstemperatur-Schwellenwerts, um Denaturieren der Carboanhydrase in der Desorptionseinheit zu vermeiden; und
   Freisetzen des $CO_2$-Gases und der Ionen-abgereicherten Lösung aus der Desorptionseinheit;
   wobei die Ionen-reiche Lösung mindestens eine Verbindung ausgewählt aus den Folgenden umfasst: tertiäre Amine, tertiäre Alkanolamine, tertiäre Aminosäuren, Carbonate, 2-Amino-2-methyl-1-propanol (AMP), 2-Amino-2-hydroxymethyl-1,3-propandiol (TRIS) und Derivate von Piperidin oder Piperazin, die durch mindestens eine Alkanolgruppe substituiert sind; und
   wobei die Carboanhydrase in einer Menge bereitgestellt wird, die ausreicht, um eine Reduktion der Regenerationsenergie von 10% auf 60% im Vergleich zur Verwendung einer Carbamat-bildenden Lösung zu ermöglichen.

2. Verfahren nach Anspruch 1, umfassend Regulieren einer Konzentration von Carboanhydrase in der Ionen-reichen Lösung durch Zugabe einer Menge der Carboanhydrase vor dem Einspeisen der Ionen-reichen Lösung in die Desorptionseinheit.

3. Verfahren nach Anspruch 1 oder 2, wobei die Umwandlung der Bicarbonationen in das $CO_2$-Gas unter Bedingungen durchgeführt wird, um die Bildung von $CO_2$-Blasen innerhalb der Ionen-reichen Lösung zu fördern.

4. Verfahren nach einem der Ansprüche 1 bis 3, umfassend Regulieren der Rheologie der Ionen-reichen Lösung, um die Bildung von $CO_2$-Blasen und die Freisetzung aus der Ionen-reichen Lösung zu fördern, wobei die Rheologie durch Verwalten einer Anfangskonzentration der Bicarbonationen in der Ionen-reichen Lösung und einer Anfangstemperatur der Ionen-reichen Lösung bevorzugt reguliert wird.

5. Verfahren nach einem der Ansprüche 1 bis 4, wobei die Ionen-reiche Lösung in Form einer Aufschlämmung vorliegt, umfassend dispergierte Ausfällungen, wobei das Verfahren Auflösen der dispergierten Ausfällungen während der Umwandlung der Bicarbonationen in das $CO_2$-Gas umfasst, wodurch zusätzliche Bicarbonationen für die enzymatische Umwandlung in das $CO_2$-Gas gebildet werden.

6. Verfahren nach einem der Ansprüche 1 bis 5, umfassend Verwalten der Konzentration der Carboanhydrase in der Desorptionseinheit in Übereinstimmung mit der Konzentration von Bicarbonationen und der Temperatur der Ionen-reichen Lösung, um die Desorptionsrate zu erhöhen.

**7.** Verfahren nach einem der Ansprüche 1 bis 6, wobei die Carboanhydrase frei in Lösung bereitgestellt wird, assoziiert mit Partikeln, die auf der Oberfläche fester oder poröser Partikel immobilisiert sind, innerhalb poröser Partikel immobilisiert sind, durch Partikel eingeschlossen sind, in Form von quervernetzten Enzymaggregaten (CLEAs) vorliegen, in Form von quervernetzten Enzymkristallen (CLECs) vorliegen oder durch magnetische Partikel gestützt sind, oder eine Kombination davon.

**8.** Verfahren nach einem der Ansprüche 1 bis 6, wobei die Carboanhydrase assoziiert mit Partikeln bereitgestellt wird, wobei die Partikel eine Größe und eine Dichte aufweisen, die geeignet sind, innerhalb der Ionen-reichen Lösung durch die $CO_2$-Blasenbildung mischbar zu sein.

**9.** Verfahren nach einem der Ansprüche 1 bis 8, wobei die mindestens eine Verbindung ausgewählt ist aus N-Methyldiethanolamin (MDEA), Dimethylmonoethanolamin (DMMEA), Diethylmonoethanolamin (DEMEA), Triisopropanolamin (TIPA), Triethanolamin und aus Kaliumcarbonat und Natriumcarbonat.

**10.** Verfahren nach einem der Ansprüche 1 bis 9, wobei die Desorptionseinheit eine Vielzahl von Desorptionsgefäßen umfasst, die in Reihe oder parallel angeordnet sind.

**11.** Verfahren nach einem der Ansprüche 1 bis 8, wobei die mindestens eine Verbindung ausgewählt ist aus tertiären Aminosäuren.

**12.** Verfahren nach einem der Ansprüche 1 bis 8, wobei die mindestens eine Verbindung ausgewählt ist aus N-sekundärem-Butylglycin, N-Methyl-N-sekundärem-Butylglycin, Diethylglycin und Dimethylglycin und Kalium- oder Natriumsalzen der Aminosäuren.

**13.** Verfahren nach einem der Ansprüche 1 bis 8, wobei die mindestens eine Verbindung ausgewählt ist aus tertiären Alkanolaminen.

**14.** Verfahren nach einem der Ansprüche 1 bis 8, wobei die mindestens eine Verbindung ausgewählt ist aus tertiären Aminen.

**Revendications**

**1.** Procédé de désorption catalysé par des enzymes pour libérer du $CO_2$ gazeux à partir d'une solution riche en ions contenant des ions bicarbonate, le procédé comprenant :

la fourniture d'une anhydrase carbonique ou de variants ou d'analogues de celle-ci dans la solution riche en ions de façon que dans une unité de désorption l'anhydrase carbonique ou les variants ou analogues de celle-ci soient laissés à s'écouler avec la solution riche en ions tout en favorisant la conversion des ions bicarbonate en $CO_2$ gazeux et en générant une solution appauvrie en ions ;
le contrôle d'une concentration initiale des ions bicarbonate dans la solution riche en ions en dessous d'un seuil de dénaturation pour éviter ou réduire la dénaturation de l'anhydrase carbonique dans l'unité de désorption ;
le contrôle d'une température de la solution riche en ions en dessous d'un seuil de température de dénaturation enzymatique pour éviter la dénaturation de l'anhydrase carbonique dans l'unité de désorption ; et
la libération du $CO_2$ gazeux et de la solution appauvrie en ions à partir de l'unité de désorption ;
dans lequel la solution riche en ions comprend au moins un composé sélectionné parmi les suivants : les amines tertiaires, les alcanolamines tertiaires, les acides aminés tertiaires, les carbonates, le 2-amino-2-méthyl-1-propanol (AMP), le 2-amino-2-hydroxyméthyl-1,3-propanediol (TRIS), et les dérivés de pipéridine ou de pipérazine qui sont substitués avec au moins un groupe alcanol ; et
dans lequel l'anhydrase carbonique est fournie en une quantité suffisante pour permettre une réduction de l'énergie de régénération de 10 % à 60 % par rapport à l'utilisation d'une solution de formation de carbamate.

**2.** Procédé selon la revendication 1, comprenant la régulation d'une concentration de l'anhydrase carbonique dans la solution riche en ions en ajoutant une quantité de l'anhydrase carbonique avant d'introduire la solution riche en ions dans l'unité de désorption.

**3.** Procédé selon la revendication 1 ou 2, dans lequel la conversion des ions bicarbonate en $CO_2$ gazeux est effectuée dans des conditions pour favoriser la formation de bulles de $CO_2$ à l'intérieur de la solution riche en ions.

**4.** Procédé selon l'une quelconque des revendications 1 à 3, comprenant le contrôle de la rhéologie de la solution riche en ions pour favoriser la formation et la libération des bulles de $CO_2$ à partir de la solution riche en ions, la rhéologie étant contrôlée de préférence en gérant une concentration initiale des ions bicarbonate dans la solution riche en ions et une température initiale de la solution riche en ions.

**5.** Procédé selon l'une quelconque des revendications 1 à 4, dans lequel la solution riche en ions est sous la forme d'une suspension comprenant des précipités dispersés, le procédé comprenant le fait de favoriser la dissolution des précipités dispersés pendant la conversion des ions bicarbonate en $CO_2$ gazeux, pour ainsi former des ions bicarbonate supplémentaires pour une conversion enzymatique en $CO_2$ gazeux.

**6.** Procédé selon l'une quelconque des revendications 1 à 5, comprenant la gestion de la concentration de l'anhydrase carbonique dans l'unité de désorption en fonction de la concentration en ions bicarbonate et de la température de la solution riche en ions, afin d'augmenter le taux de désorption.

**7.** Procédé selon l'une quelconque des revendications 1 à 6, dans lequel l'anhydrase carbonique est fournie libre en solution, associée à des particules, immobilisée à la surface de particules solides ou poreuses, immobilisée à l'intérieur de particules poreuses, piégée par des particules, sous la forme d'agrégats enzymatiques réticulés (CLEA), sous forme de cristaux enzymatiques réticulés (CLEC), ou supportée par des particules magnétiques, ou une combinaison de ceux-ci.

**8.** Procédé selon l'une quelconque des revendications 1 à 6, dans lequel l'anhydrase carbonique est fournie associée à des particules, les particules ayant une taille et une densité appropriées pour pouvoir être mélangées dans la solution riche en ions par la formation de bulles de $CO_2$.

**9.** Procédé selon l'une quelconque des revendications 1 à 8, dans lequel au moins un composé est sélectionné parmi la N-méthyl-diéthanolamine (MDEA), la diméthylmonoéthanolamine (DMMEA), la diéthylmonoéthanolamine (DEMEA), la triisopropanolamine (TIPA), la triéthanolamine, et parmi le carbonate de potassium et le carbonate de sodium.

**10.** Procédé selon l'une quelconque des revendications 1 à 9, dans lequel l'unité de désorption comprend une pluralité de récipients de désorption agencés en série ou en parallèle.

**11.** Procédé selon l'une quelconque des revendications 1 à 8, dans lequel le au moins un composé est sélectionné parmi les acides aminés tertiaires.

**12.** Procédé selon l'une quelconque des revendications 1 à 8, dans lequel le au moins un composé est sélectionné parmi la N-butyl secondaire glycine, la N-méthyl N-butyl secondaire glycine, la diéthylglycine, et la diméthylglycine, et les sels de sodium ou de potassium des acides aminés.

**13.** Procédé selon l'une quelconque des revendications 1 à 8, dans lequel le au moins un composé est sélectionné parmi les alcanolamines tertiaires.

**14.** Procédé selon l'une quelconque des revendications 1 à 8, dans lequel le au moins un composé est sélectionné parmi les amines tertiaires.

FIG. 1

to vacuumpump

cooling water

cooling water

PI

TI

TI

FIG. 2

FIG. 3

EP 2 632 570 B1

FIG. 4

FIG. 5

FIG. 6

FIG. 7

FIG. 8

FIG. 9

EP 2 632 570 B1

CO2 Product

Desorber

Pump-2

HEX

Cooler

Formulator

FIG. 10

Pump-1

Absorber

Vent Gas

Flue Gas

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61439100
- CA 2010001212 W
- CA 2010001213 W
- CA 2010001214 W
- US 6908507 B
- US 7176017 B
- US 6524843 B
- US 6475382 B
- US 6946288 B
- US 7596952 B
- US 7740689 B
- US 7514056 B
- US 7521217 B
- US 61272792 B
- US 61439100 B